# EUROPEAN PATENT APPLICATION

(11) **EP 4 742 187 A1**
(43) Date of publication of application: **13.05.2026**
(21) Application number: 25215401.8
(22) Date of filing: 12.11.2025
(51) Int. Cl.: G06V 10/82, G06V 20/40

(54) **SYSTEMS AND METHODS FOR ANNOTATING CONTENT**

(30) Priority: 12.11.2024 GR 20240100798; 12.12.2024 US 202418979438
(71) Applicant: Spotify AB, 111 53 Stockholm (SE)
(72) Inventor: KORKINOF, Dimitrios, 111 53 Stockholm (SE); HU, Jian, 111 53 Stockholm (SE); BEGUERISSE DIAZ, Mariano, 111 53 Stockholm (SE)
(74) Representative: Ström & Gulliksson AB

(57) **Abstract**

A computer system obtains a plurality of annotated short segments of content. The computer system trains a model for summarizing longer segments of content using training data comprising the plurality of annotated short segments of content, including: (i) applying a prompt and the plurality of the annotated short segments of content to a first language model to produce a summary of the plurality of annotated short segments of content; (ii) evaluating the summary of the plurality of annotated short segments of content against predefined criteria; and (iii) applying the evaluation of the summary and the prompt to a second language model to produce an updated version of the prompt; and iteratively performing (i), (ii), and (iii) at least two times.

## Description

### TECHNICAL FIELD

The disclosed embodiments relate generally to annotating content items, and more particularly, to generate data for training a model for summarizing longer segments of content.

### BACKGROUND

Summarization of image and/or video content is a compelling field, with current captioning models achieving remarkable results on single images or second-level videos. However, many videos are much longer than second-level, extending to hour(s)-level durations. Current research on long-form video captioning mostly focuses on minute-level videos, with little exploration into hour(s)-long videos. Additionally, manually annotating hour(s)-long videos (e.g., for the purposes of training models) is challenging due to their length. Despite this, such videos are quite common, making it necessary to develop a model capable of captioning hour(s)-long videos.

### SUMMARY

One approach to annotating longer videos is to perform the annotations recursively. A long video is divided into short segments, which are captioned by a model. The captions of the short segments are then used to summarize a longer portion of video (e.g., by the same model or a different model), and so on, until the full-length video is summarized. Existing methods of recursively summarizing video use a supervised training approach at every level, with human annotations being used to train the model(s).

The disclosed embodiments use an unsupervised approach to at least partially train a model to generate a summary of a longer portion of video using captions of shorter portions of video. The unsupervised approach generates summaries using the iterative process shown and explained below. In this way, high quality training data can be generated for training a model for summarizing longer segments of content, thereby enabling a model to be trained to provide a more accurate output in a more efficient manner.

To that end, in accordance with some embodiments, a method is provided. The method includes obtaining a plurality of annotated short segments of content. The method further includes determining training data comprising the plurality of annotated short segments of content, the training data for use in training a model for summarizing longer segments of content, including: (i) applying a prompt and the plurality of the annotated short segments of content to a first large language model to produce a summary of the plurality of annotated short segments of content; (ii) evaluating the summary of the plurality of annotated short segments of content against predefined criteria; and (iii) applying the evaluation of the summary and the prompt to a second large language model to produce an updated version of the prompt; and iteratively performing (i), (ii), and (iii) at least two times. The method further includes, after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content

In accordance with some embodiments, an electronic device is provided. The electronic device includes one or more processors and memory storing one or more programs. The one or more programs include instructions for performing any of the methods described herein.

In accordance with some embodiments, a non-transitory computer-readable storage medium is provided. The non-transitory computer-readable storage medium stores one or more programs for execution by an electronic device with one or more processors. The one or more programs comprising instructions for performing any of the methods described herein.

Thus, systems are provided with improved methods of generating training data and training a model for summarizing longer segments of content.

### BRIEF DESCRIPTION OF THE DRAWINGS

The embodiments disclosed herein are illustrated by way of example, and not by way of limitation, in the figures of the accompanying drawings. Like reference numerals refer to corresponding parts throughout the drawings and specification.
FIG. 1 is a block diagram illustrating a media content delivery system, in accordance with some embodiments.
FIG. 2 is a block diagram illustrating an electronic device, in accordance with some embodiments.
FIG. 3 is a block diagram illustrating a media content server, in accordance with some embodiments.
FIGS. 4A-4C are example block diagrams for optimizing a prompt to generate a summary of content using captions, in accordance with some embodiments.
FIGS. 5A-5B is a block diagram illustrating a system for generating summaries for a full content item using captions, in accordance with some embodiments.
FIGS. 6A-6B are flow diagrams illustrating a method for generating summaries for a full content item using captions, in accordance with some embodiments.

### DETAILED DESCRIPTION

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are used only to distinguish one element from another. For example, a first electronic device could be termed a second electronic device, and, similarly, a second electronic device could be termed a first electronic device, without departing from the scope of the various described embodiments. The first electronic device and the second electronic device are both electronic devices, but they are not the same electronic device.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

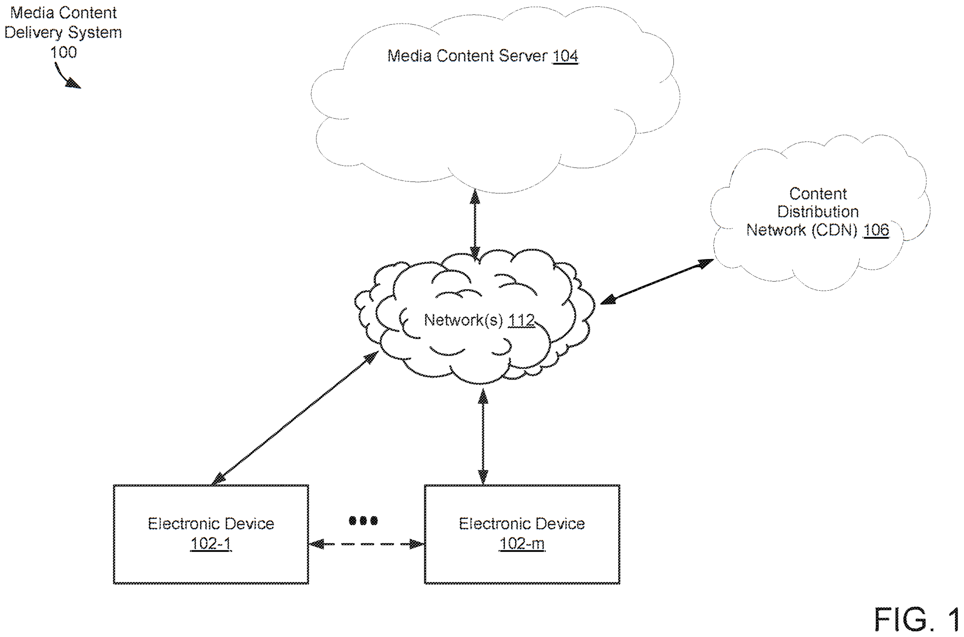

FIG. 1 is a block diagram illustrating a media content delivery system 100, in accordance with some embodiments. The media content delivery system 100 includes one or more electronic devices 102 (e.g., electronic device 102-1 to electronic device 102-m, where m is an integer greater than one), one or more media content servers 104, and/or one or more content distribution networks (CDNs) 106. The one or more media content servers 104 are associated with (e.g., at least partially compose) a media-providing service. The one or more CDNs 106 store and/or provide one or more content items (e.g., to electronic devices 102). In some embodiments, the CDNs 106 are included in the media content servers 104. One or more networks 112 communicably couple the components of the media content delivery system 100. In some embodiments, the one or more networks 112 include public communication networks, private communication networks, or a combination of both public and private communication networks. For example, the one or more networks 112 can be any network (or combination of networks) such as the Internet, other wide area networks (WAN), local area networks (LAN), virtual private networks (VPN), metropolitan area networks (MAN), peer-to-peer networks, and/or ad-hoc connections.

In some embodiments, an electronic device 102 is associated with one or more users. In some embodiments, an electronic device 102 is a personal computer, mobile electronic device, wearable computing device, laptop computer, tablet computer, mobile phone, feature phone, smart phone, an infotainment system, digital media player, a speaker, television (TV), and/or any other electronic device capable of presenting media content (e.g., controlling playback of media items, such as music tracks, podcasts, videos, etc.). Electronic devices 102 may connect to each other wirelessly and/or through a wired connection (e.g., directly through an interface, such as an HDMI interface). In some embodiments, electronic devices 102-1 and 102-m are the same type of device (e.g., electronic device 102-1 and electronic device 102-m are both speakers). Alternatively, electronic device 102-1 and electronic device 102-m include two or more different types of devices.

In some embodiments, electronic devices 102-1 and 102-m send and receive media-control information through network(s) 112. For example, electronic devices 102-1 and 102-m send media control requests (e.g., requests to play music, podcasts, movies, videos, or other media items, or playlists thereof) to media content server 104 through network(s) 112. Additionally, electronic devices 102-1 and 102-m, in some embodiments, also send indications of media content items to media content server 104 through network(s) 112. In some embodiments, the media content items are uploaded to electronic devices 102-1 and 102-m before the electronic devices forward the media content items to media content server 104.

In some embodiments, electronic device 102-1 communicates directly with electronic device 102-m (e.g., as illustrated by the dotted-line arrow), or any other electronic device 102. As illustrated in FIG. 1, electronic device 102-1 is able to communicate directly (e.g., through a wired connection and/or through a short-range wireless signal, such as those associated with personal-area-network (e.g., BLUETOOTH / BLE) communication technologies, radio-frequency-based near-field communication technologies, infrared communication technologies, etc.) with electronic device 102-m. In some embodiments, electronic device 102-1 communicates with electronic device 102-m through network(s) 112. In some embodiments, electronic device 102-1 uses the direct connection with electronic device 102-m to stream content (e.g., data for media items) for playback on the electronic device 102-m.

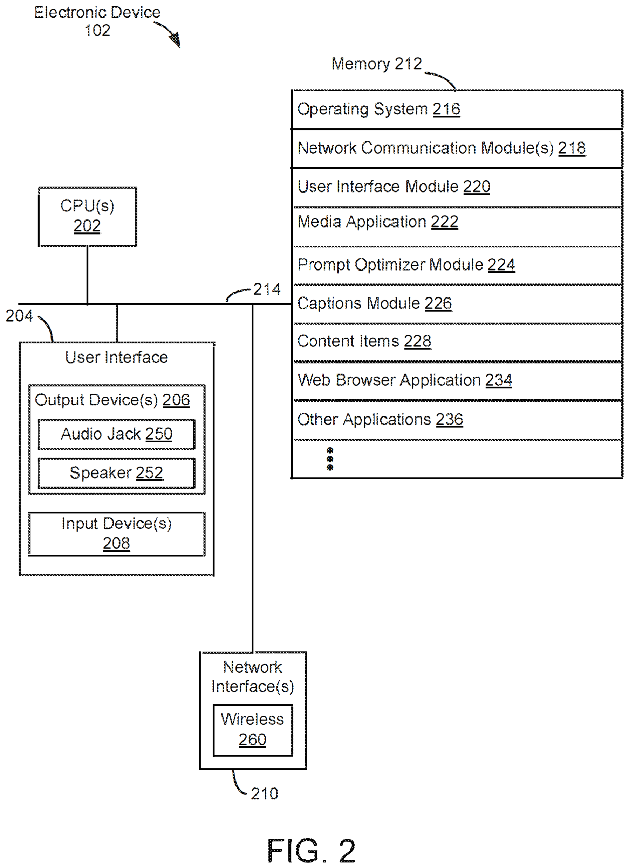

In some embodiments, electronic device 102-1 and/or electronic device 102-m include a media application 222 (FIG. 2) that allows a respective user of the respective electronic device to upload (e.g., to media content server 104), browse, request (e.g., for playback at the electronic device 102), and/or present media content (e.g., control playback of music tracks, playlists, videos, etc.). In some embodiments, one or more media content items are stored locally by an electronic device 102 (e.g., in memory 212 of the electronic device 102, FIG. 2). In some embodiments, one or more media content items are received by an electronic device 102 in a data stream (e.g., from the CDN 106 and/or from the media content server 104). The electronic device(s) 102 are capable of receiving media content (e.g., from the CDN 106) and presenting the received media content. For example, electronic device 102-1 may be a component of a network-connected audio/video system (e.g., a home entertainment system, a radio/alarm clock with a digital display, or an infotainment system of a vehicle). In some embodiments, the CDN 106 sends media content to the electronic device(s) 102.

In some embodiments, the CDN 106 stores and provides media content (e.g., media content requested by the media application 222 of electronic device 102) to electronic device 102 via the network(s) 112. Content (also referred to herein as "media items," "media content items," and "content items") is received, stored, and/or served by the CDN 106. In some embodiments, content includes audio (e.g., music, spoken word, podcasts, audiobooks, etc.), video (e.g., short-form videos, music videos, television shows, movies, clips, previews, etc.), text (e.g., articles, blog posts, emails, etc.), image data (e.g., image files, photographs, drawings, renderings, etc.), games (e.g., 2- or 3-dimensional graphics-based computer games, etc.), or any combination of content types (e.g., web pages that include any combination of the foregoing types of content or other content not explicitly listed). In some embodiments, content includes one or more audio media items (also referred to herein as "audio items," "tracks," and/or "audio tracks").

In some embodiments, media content server 104 receives media requests (e.g., commands) from electronic devices 102. In some embodiments, media content server 104 includes a voice API, a connect API, and/or key service. In some embodiments, media content server 104 validates (e.g., using key service) electronic devices 102 by exchanging one or more keys (e.g., tokens) with electronic device(s) 102.

In some embodiments, media content server 104 and/or CDN 106 stores one or more playlists (e.g., information indicating a set of media content items). For example, a playlist is a set of media content items defined by a user and/or defined by an editor associated with a media-providing service. The description of the media content server 104 as a "server" is intended as a functional description of the devices, systems, processor cores, and/or other components that provide the functionality attributed to the media content server 104. It will be understood that the media content server 104 may be a single server computer, or may be multiple server computers. Moreover, the media content server 104 may be coupled to CDN 106 and/or other servers and/or server systems, or other devices, such as other client devices, databases, content delivery networks (e.g., peer-to-peer networks), network caches, and the like. In some embodiments, the media content server 104 is implemented by multiple computing devices working together to perform the actions of a server system (e.g., cloud computing).

FIG. 2 is a block diagram illustrating an electronic device 102 (e.g., electronic device 102-1 and/or electronic device 102-m, FIG. 1), in accordance with some embodiments. The electronic device 102 includes one or more central processing units (CPU(s), i.e., processors or cores) 202, one or more network (or other communications) interfaces 210, memory 212, and one or more communication buses 214 for interconnecting these components. The communication buses 214 optionally include circuitry (sometimes called a chipset) that interconnects and controls communications between system components.

In some embodiments, the electronic device 102 includes a user interface 204, including output device(s) 206 and/or input device(s) 208. In some embodiments, the input devices 208 include a keyboard, mouse, or track pad. Alternatively, or in addition, in some embodiments, the user interface 204 includes a display device that includes a touch-sensitive surface, in which case the display device is a touch-sensitive display. In electronic devices that have a touch-sensitive display, a physical keyboard is optional (e.g., a soft keyboard may be displayed when keyboard entry is needed). In some embodiments, the output devices (e.g., output device(s) 206) include a speaker 252 (e.g., speakerphone device) and/or an audio jack 250 (or other physical output connection port) for connecting to speakers, earphones, headphones, or other external listening devices. Furthermore, some electronic devices 102 use a microphone and voice recognition device to supplement or replace the keyboard. Optionally, the electronic device 102 includes an audio input device (e.g., a microphone) to capture audio (e.g., speech from a user).

In some embodiments, the one or more network interfaces 210 include wireless and/or wired interfaces for receiving data from and/or transmitting data to other electronic devices 102, a media content server 104, a CDN 106, and/or other devices or systems. In some embodiments, data communications are carried out using any of a variety of custom or standard wireless protocols (e.g., NFC, RFID, IEEE 802.15.4, Wi-Fi, ZigBee, 6LoWPAN, Thread, Z-Wave, Bluetooth, ISA100.11a, WirelessHART, MiWi, etc.). Furthermore, in some embodiments, data communications are carried out using any of a variety of custom or standard wired protocols (e.g., USB, Firewire, Ethernet, etc.). For example, the one or more network interfaces 210 include a wireless interface 260 for enabling wireless data communications with other electronic devices 102, media presentations systems, and/or or other wireless (e.g., Bluetooth-compatible) devices (e.g., for streaming audio data to the media presentations system of an automobile). Furthermore, in some embodiments, the wireless interface 260 (or a different communications interface of the one or more network interfaces 210) enables data communications with other WLAN-compatible devices (e.g., a media presentations system) and/or the media content server 104 (via the one or more network(s) 112, FIG. 1).

In some embodiments, electronic device 102 includes one or more sensors including, but not limited to, accelerometers, gyroscopes, compasses, magnetometer, light sensors, near field communication transceivers, barometers, humidity sensors, temperature sensors, proximity sensors, range finders, and/or other sensors/devices for sensing and measuring various environmental conditions.

Memory 212 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. Memory 212 may optionally include one or more storage devices remotely located from the CPU(s) 202. Memory 212, or alternately, the non-volatile memory solid-state storage devices within memory 212, includes a non-transitory computer-readable storage medium. In some embodiments, memory 212 or the non-transitory computer-readable storage medium of memory 212 stores the following programs, modules, and data structures, or a subset or superset thereof:
- an operating system 216 that includes procedures for handling various basic system services and for performing hardware-dependent tasks;
- network communication module(s) 218 for connecting the electronic device 102 to other computing devices (e.g., media presentation system(s), media content server 104, and/or other client devices) via the one or more network interface(s) 210 (wired or wireless) connected to one or more network(s) 112;
- a user interface module 220 that receives commands and/or inputs from a user via the user interface 204 (e.g., from the input devices 208) and provides outputs for playback and/or display on the user interface 204 (e.g., the output devices 206);
- a media application 222 (e.g., an application for accessing a media-providing service of a media content provider associated with media content server 104) for uploading, browsing, receiving, processing, presenting, and/or requesting playback of media (e.g., media items).
- a prompt optimizer module 224 for updating a prompt provided to a model (e.g., a large language model) that generates a summary for a content item;
- a captions module 226 for obtaining and/or storing captions for one or more content items;
- content items 228 such as video content items and/or audio content items;
- a web browser application 234 for accessing, viewing, and interacting with web sites;
   and
- other applications 236, such as applications for word processing, calendaring, mapping, weather, stocks, time keeping, virtual digital assistant, presenting, number crunching (spreadsheets), drawing, instant messaging, e-mail, telephony, video conferencing, photo management, video management, a digital music player, a digital video player, 2D gaming, 3D (e.g., virtual reality) gaming, electronic book reader, and/or workout support.

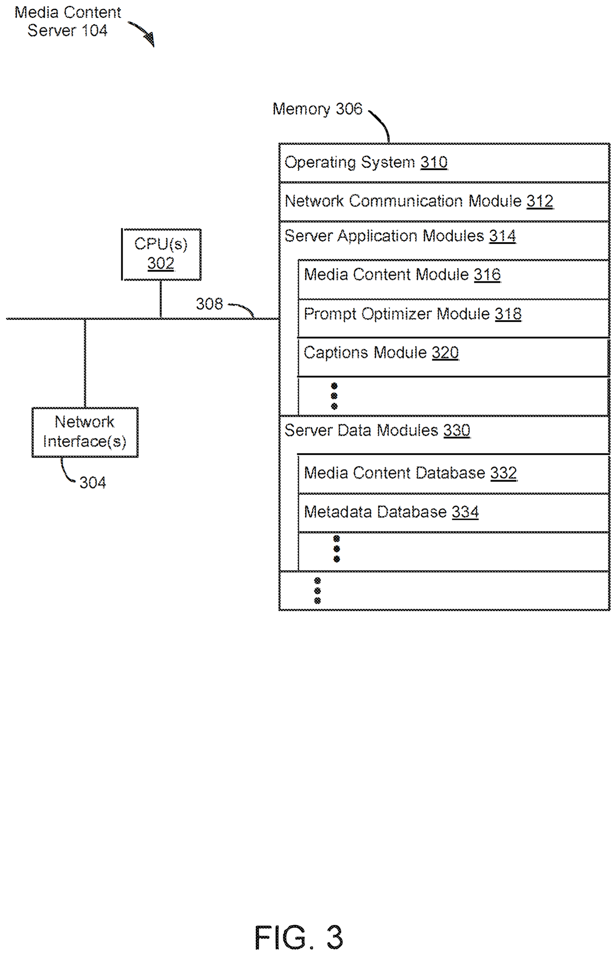

FIG. 3 is a block diagram illustrating a media content server 104, in accordance with some embodiments. The media content server 104 typically includes one or more central processing units/cores (CPUs) 302, one or more network interfaces 304, memory 306, and one or more communication buses 308 for interconnecting these components.

Memory 306 includes high-speed random access memory, such as DRAM, SRAM, DDR RAM, or other random access solid-state memory devices; and may include non-volatile memory, such as one or more magnetic disk storage devices, optical disk storage devices, flash memory devices, or other non-volatile solid-state storage devices. Memory 306 optionally includes one or more storage devices remotely located from one or more CPUs 302. Memory 306, or, alternatively, the non-volatile solid-state memory device(s) within memory 306, includes a non-transitory computer-readable storage medium. In some embodiments, memory 306, or the non-transitory computer-readable storage medium of memory 306, stores the following programs, modules and data structures, or a subset or superset thereof:
- an operating system 310 that includes procedures for handling various basic system services and for performing hardware-dependent tasks;
- a network communication module 312 that is used for connecting the media content server 104 to other computing devices via one or more network interfaces 304 (wired or wireless) connected to one or more networks 112;
- one or more server application modules 314 for performing various functions with respect to providing and managing a content service, the server application modules 314 including, but not limited to, one or more of:
   o a media content module 316 for storing one or more media content items and/or sending (e.g., streaming), to the electronic device 102, one or more requested media content item(s);
   o a prompt optimizer module 318 for updating a prompt provided to a model (e.g., a large language model) that generates a summary for a content item;
   o a captions module 320 for obtaining and/or storing captions for one or more content items;

- one or more server data module(s) 330 for handling the storage of and/or access to media items and/or metadata relating to the media items; in some embodiments, the one or more server data module(s) 330 include:
   o a media content database 332 for storing media items; and
   o a metadata database 334 for storing metadata relating to the media items, including e.g., a genre associated with the respective media items.

In some embodiments, the media content server 104 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Each of the above identified modules stored in memory 212 and 306 corresponds to a set of instructions for performing a function described herein. The above identified modules or programs (i.e., sets of instructions) need not be implemented as separate software programs, procedures, or modules, and thus various subsets of these modules may be combined or otherwise re-arranged in various embodiments. In some embodiments, memory 212 and 306 optionally store a subset or superset of the respective modules and data structures identified above. Furthermore, memory 212 and 306 optionally store additional modules and data structures not described above.

Although FIG. 3 illustrates the media content server 104 in accordance with some embodiments, FIG. 3 is intended more as a functional description of the various features that may be present in one or more media content servers than as a structural schematic of the embodiments described herein. In practice, and as recognized by those of ordinary skill in the art, items shown separately could be combined and some items could be separated. For example, some items shown separately in FIG. 3 could be implemented on single servers and single items could be implemented by one or more servers. In some embodiments, media content database 332 and/or metadata database 334 are stored on devices (e.g., CDN 106) that are accessed by media content server 104. The actual number of servers used to implement the media content server 104, and how features are allocated among them, will vary from one implementation to another and, optionally, depends in part on the amount of data traffic that the server system handles during peak usage periods as well as during average usage periods.

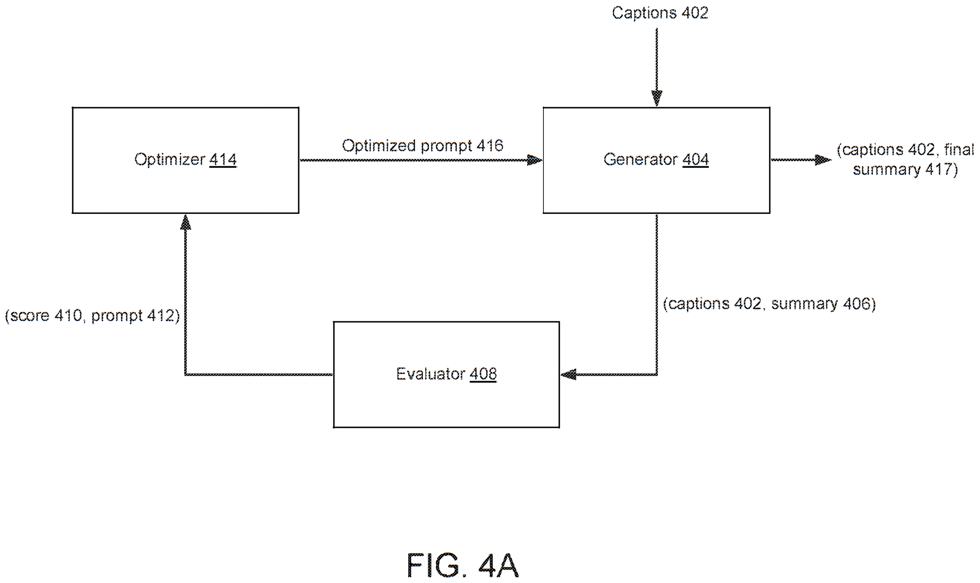

FIG. 4A illustrates a block diagram of iteratively updating a prompt that is used to generate training data for a machine learning model (e.g., large language model) in accordance with some embodiments. In some embodiments, the machine learning model is trained to summarize longer segments of content (e.g., hours-long video content and/or lengths of an entirety of video content items). The prompt, therefore, is used to generate training summaries by applying the prompt and captions for shorter segments of content to the machine learning model.

In some embodiments, the iterative process includes receiving a first set of captions 402 for a first content item. In some embodiments, the first set of captions 402 is obtained from a transformer that produces captions from video and/or audio clips of the content item (e.g., the content item is divided up into shorter video and/or audio clips, and each caption of the first set of captions is a caption for a respective shorter video and/or audio clip).

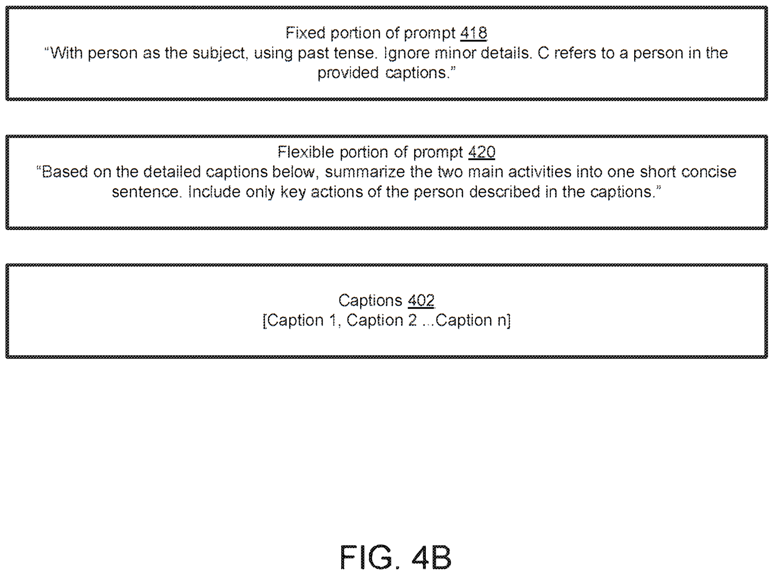

In some embodiments, for the first iteration, the captions 402 and an initial prompt are provided to generator 404 (e.g., a first large language model). FIG. 4B illustrates an example of the captions 402 and initial prompt (including a fixed portion 418 and a flexible (e.g., non-fixed) portion 420) that is provided to the generator 404. In some embodiments, the generator 404 outputs a summary 406 for the captions 402. For example, the prompt provided to generator 404 is a prompt to generate a summary of the captions 402 (e.g., "With person as the subject, using past tense. Ignore minor details. C refers to a person in the provided captions" and "Based on the detailed captions below, summarize the two main activities into one short concise sentence. Include only key actions of the person described in the captions"). As illustrated in FIG. 4B, in some embodiments, the fixed portion of the prompt 418 does not update with the iterations of the process, whereas the flexible portion of the prompt 420 is updated (e.g., replaced with an optimized prompt 416).

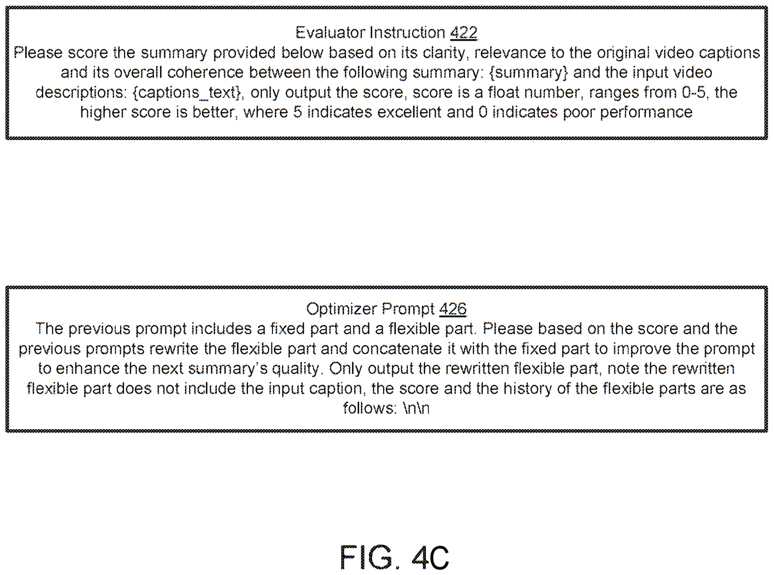

In some embodiments, the summary 406 is evaluated by evaluator 408 to produce a score 410 for the initial prompt 412 that was used to generate the summary 406. As such, the score 410 represents a quality of the summary 406 that was produced by using the initial prompt fed to generator 404. The quality of the summary 406 may represent its suitability for use as training data in training a model for summarizing longer segments of content. For example, as illustrated in FIG. 4C, the evaluator 408 is provided with an instruction 422 (e.g., "Please score the summary provided below based on its clarity, relevance to the original video captions and its overall coherence between the following summary: {summary} and the input video descriptions: {captions_text}, only output the score, score is a float number, ranges from 0-5, the higher score is better, where 5 indicates excellent and 0 indicates poor performance"). In some embodiments, the instruction 422 does not change across iterations (e.g., the score is produced in a same manner for each iteration to score the quality (e.g., clarity, relevance, and/or coherence) of the summary 406.

In some embodiments, the optimizer 414 (e.g., a second large language model) updates the prompt, optionally based on the score 410, to generate optimized prompt 416. For example, as illustrated in FIG. 4C, the optimizer 414 is provided with optimizer prompt 426 (e.g., "The previous prompt includes a fixed part and a flexible part. Please based on the score and the previous prompts rewrite the flexible part and concatenate it with the fixed part to improve the prompt to enhance the next summary's quality. Only output the rewritten flexible part, note the rewritten flexible part does not include the input caption, the score and the history of the flexible parts are as follows: \n\n") that instructs the optimizer 414 to rewrite the flexible part of the prompt 412 to output the optimized prompt 426 (e.g., the rewritten flexible part).

In some embodiments, the process described above with reference to FIG. 4A is repeated with the optimized prompt 416 and the captions 402 (e.g., a second summary is generated by generator 404 using the optimized prompt 416 and the second summary is evaluated by evaluated 408 to determine a score representing the quality of the optimized prompt 416 (e.g., based on the evaluated quality of the second summary that was generated using the optimized prompt 416)).

In some embodiments, the system iteratively produces a plurality of optimized prompts until a final iteration. For example, the final iteration is determined (e.g., the system does not perform an additional iteration after the final iteration) in accordance with a determination that the score 410 produced by the evaluator 408 satisfies a threshold score. In some embodiment, the final iteration is determined in accordance with a determination that a next iteration does not produce a higher score 410 than the final iteration (e.g., optionally by performing an iteration after the final iteration, whereby the final iteration is determined as the iteration with the maximum score before the score decreases with subsequent iterations). In some embodiments, the final iteration is determined in accordance with a determination that a maximum number of iterations has been performed (e.g., the system performs up to 5 iterations, up to 10 iterations, or another number of maximum iterations).

In some embodiments, the optimized prompt that is generated from the final iteration is used to generate a final summary 417 for the content item associated with the captions 402. For example, a respective optimized prompt 416 and final summary 417 is determined for each of a set of captions (e.g., each set of captions associated with a respective media item) (e.g., the process is repeated for a plurality of content items to generate training data). As such, the training data comprises respective media items and respective final summaries (e.g., each final summary generated from an optimized prompt for the respective media item using the iterative process described with reference to FIG. 4A). This approach enables high quality training data to be generated for training a model for summarizing longer segments of content is, thereby enabling a model to be trained to provide a more accurate output in a more efficient manner.

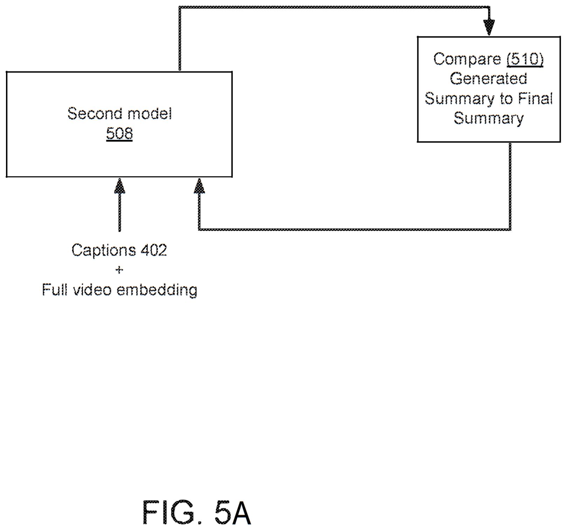

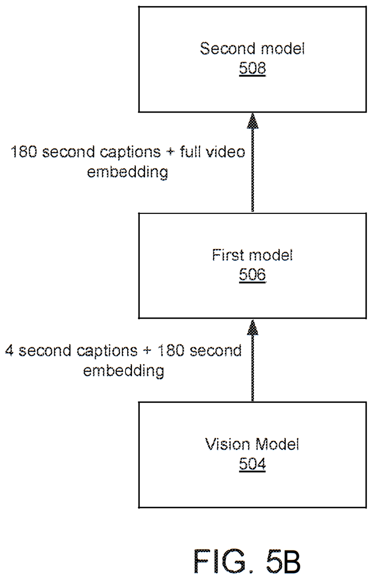

In some embodiments, the final summary 417 (e.g., final summary 510) is used to generate training data for training a model for summarizing longer segments of content (e.g., second model 508, FIGs. 5A and 5B).

FIG. 5A illustrates a block diagram of training a model for summarizing longer segments of content (e.g. the second model 508). In some embodiments, captions 402 (e.g., 180-second captions) for a first training content item and a full video embedding for the first training content item are input to the second model 508, and the second model 508 is trained to generate a summary of the first training content item and is updated (e.g., using backpropagation) by comparing (510) the generated summary to the final summary (e.g., final summary 417, FIG. 4A) that is generated using the iterative process described with reference to FIG. 4A. The training is repeated with additional training content items by inputting the captions and embedding of the respective training content item and comparing the resulting generated summary with a final summary generated for the respective content item using the process described with reference to FIG. 4A. As such, a final summary 417 (e.g., final summary 510) is used as training data for training a model for summarizing longer segments of content.

FIG. 5B illustrates a system for providing summary of a content item in accordance with some embodiments. In some embodiments, the system includes at least two machine learning models (e.g., large language models), including first model 506 and the second model 508, that are used, in succession (e.g., during inference), to progressively caption longer content items using the outputs of shorter content items. In some embodiments, the system includes one large language model (e.g., second model 508 without first model 506) and includes a vision model.

For example, the system, during inference for a respective content item, includes a vision model 504 (e.g., a transformer, convolutional neural network (CNN) and/or other model) that generates a caption and a set of features (e.g., a representation of the respective content item, such as a content embedding) from a plurality of short content items (e.g., 4-second long video and/or audio clips of the respective content item). In some embodiments, the short content items comprise clips of a first length (e.g., 2-second, 4-seconds, 10-seconds, or another length) of the respective content item. In some embodiments, the set of features is provided to a first model 506 (e.g., a large language model) that is trained to generate longer captions (e.g., 180 second captions) from the 4-second captions and the set of features (e.g., the content embedding). In some embodiments, the content embedding is a content embedding representing a longer portion of the respective content item than the short content items (e.g., a 180-second embedding is generated from the 4-second long clips).

In some embodiments, a second model 508 (e.g., a large language model) is used to generate a full content summary for the respective content item from the longer captions (e.g., generated by the first model 506) and a full embedding of the respective content item. As such, the second model 508 generates a full content summary for the respective content item from captions (e.g., annotations) representing a portion, less than all, (e.g., 180-second portion) of the full respective content item.

In some embodiments, as described with reference to FIG. 5A, the second model 508 is trained using respective final summaries corresponding to respective content items, whereby the final summaries are generated using the optimized prompt that is generated by the iterative process described with reference to FIG. 4A.

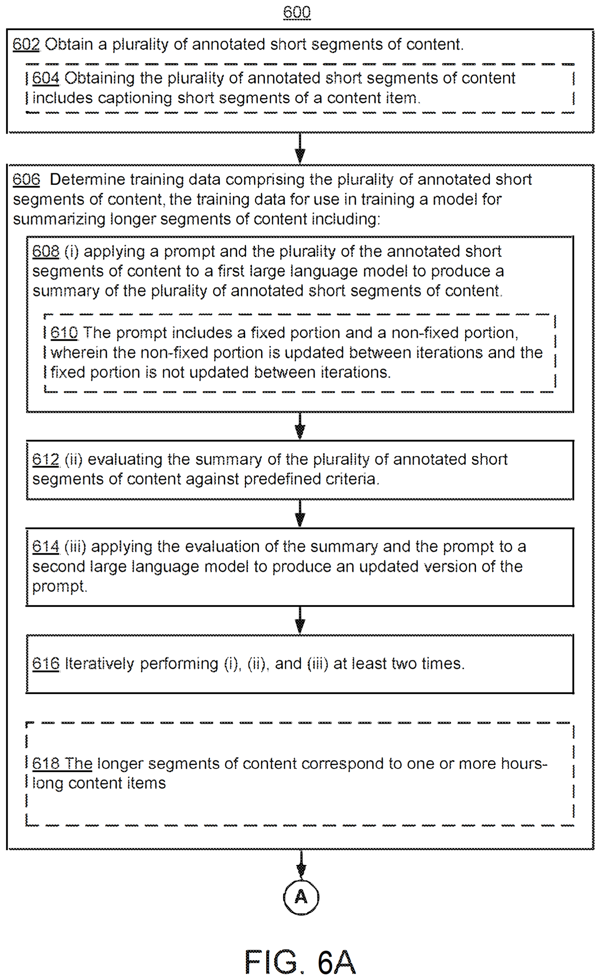

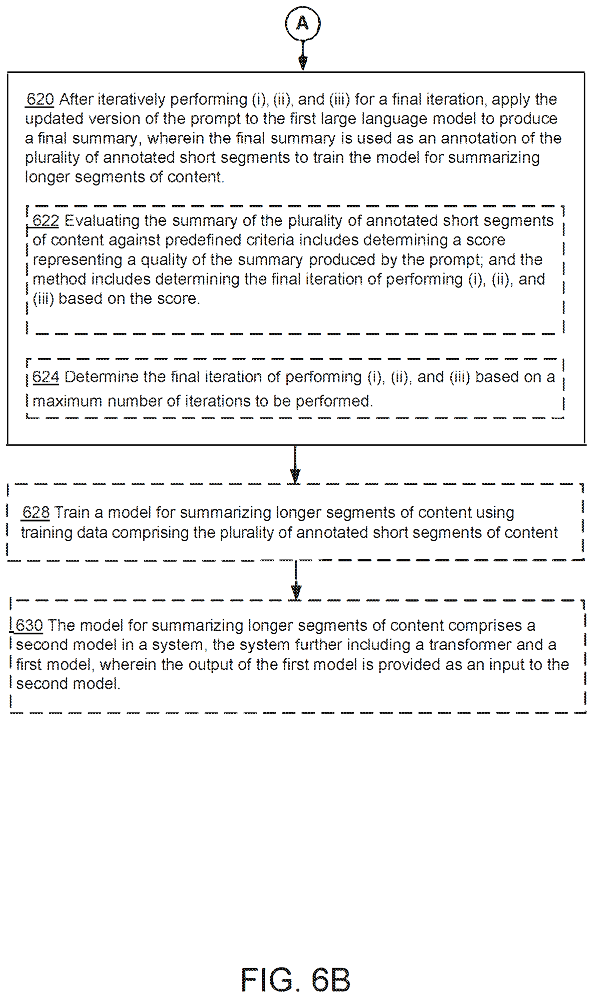

FIGS. 6A-6B are flow diagrams illustrating a method 600 of determining training data for use in training a model for summarizing longer segments of content, in accordance with some embodiments. In some embodiments, method 600 is performed by a computer system (e.g., electronic device 102 and/or media content server 104, or a combination thereof).

The computer system obtains (602) a plurality of annotated short segments of content (e.g., each short segment corresponding to minute-level content). In some embodiments, the computer system obtains a plurality of sets of annotated short segments, each set corresponding to a longer media item, the plurality of sets corresponding to a plurality of media items. For example, the computer system obtains a first set of captions 402 for a first media content item.

In some embodiments, obtaining the plurality of annotated short segments of content includes (604) captioning short segments of a content item (e.g., a video and/or audio content item). For example, for a first content item, captions 402 are obtained.

The computer system determines (606) training data comprising the plurality of annotated short segments of content, the training data for use in training a model (using an unsupervised approach) (e.g., second model 508) for summarizing longer segments of content, including: (i) applying (608) a prompt (e.g., an initial prompt) and the plurality of the annotated short segments of content (e.g., captions 402) to a first language model (e.g., generator 404) to produce a summary (e.g., summary 406) of the plurality of annotated short segments of content; (ii) evaluating (612) (e.g., using evaluator 408) the summary of the plurality of annotated short segments of content against predefined criteria; and (iii) applying (614) the evaluation of the summary and the prompt to a second language model (e.g., optimizer 414) to produce an updated version of the prompt (e.g., optimized prompt 416); and iteratively performing (616) (i), (ii), and (iii) at least two times. In some embodiments, the trained model is a third language model different from the first and second language models.

In some embodiments, the prompt includes (610) a fixed portion and a non-fixed portion, wherein the non-fixed portion is updated between iterations and the fixed portion is maintained (e.g., not updated) between iterations, as described with reference to FIG. 4B, including fixed portion of prompt 418 and flexible portion of prompt 420.

In some embodiments, the longer segments of content correspond to (618) one or more hours-long content items. For example, the longer segments of content comprise an entire length of a content item (e.g., an entire video content item).

In some embodiments, after iteratively performing (i), (ii), and (iii) for a final iteration (e.g., a last time), the computer system applies (620) the updated version of the prompt to the first large language model to produce a final summary (e.g., final summary 417), wherein the final summary is used as an annotation of the plurality of annotated short segments (e.g., forming a longer segment than the short segments used as training data) to train the model for summarizing longer segments of content.

In some embodiments, evaluating the summary of the plurality of annotated short segments of content against predefined criteria includes (622) determining a score (e.g., score 410) representing a quality of the summary produced by the prompt; and the method includes determining the final iteration of performing (i), (ii), and (iii) based on the score (e.g., in accordance with a determination that the score satisfies a threshold score; in accordance with a determination that the score is the maximum score (e.g., that a next iteration does not produce a higher score than the current score)).

In some embodiments, the computer system determines (624) the final iteration of performing (i), (ii), and (iii) based on a maximum number of iterations to be performed.

In some embodiments, captions 402 are domain adapted (e.g., to replace a first person perspective from the annotated short segments with a third person perspective). In some embodiments, the domain adaptation is performed on the segments (e.g., captions 402) by a separate large language model. For example, a prompt is provided to the separate large language model that instructs the system to adapt a domain of the captions 402, such as: "This caption was generated from a long video cut into a 30-second short video. However, since the training data used was from a first-person perspective, the captions assume that the camera is mounted on a person's head, which is not the case. The camera, referred to as C, is unrelated to the content of the video. Rewriting each sentence in English to exclude C, the subject should be the people mentioned in the video other than C. Please generate a response that includes only the captions, without any numbers, introductory phrases, or any non-caption content."

In some embodiments, the computer system trains (628) a model (using an unsupervised approach) (e.g., second model 508) for summarizing longer segments of content using training data comprising the plurality of annotated short segments of content. In some embodiments, the model for summarizing longer segments of content comprises (630) a second model (e.g., second model 508) in a system (e.g., as illustrated in FIG. 5B), the system further including a transformer (e.g., vision model 504) and a first model (e.g., first model 506), wherein the output of the first model is provided as an input to the second model.

Although FIGS. 6A-6B illustrate a number of logical stages in a particular order, stages which are not order dependent may be reordered and other stages may be combined or broken out. Some reordering or other groupings not specifically mentioned will be apparent to those of ordinary skill in the art, so the ordering and groupings presented herein are not exhaustive. Moreover, it should be recognized that the stages could be implemented in hardware, firmware, software, or any combination thereof. In addition, in accordance with some embodiments, various operations described with respect to other methods may be combined with the operations described with respect to method 600.

Also disclosed are examples according to the following clauses
A1.A method, comprising:
   obtaining a plurality of annotated short segments of content;
   training a model for summarizing longer segments of content using training data comprising the plurality of annotated short segments of content, including:
      applying a prompt and the plurality of the annotated short segments of content to a first language model distinct from the model to produce a summary of the plurality of annotated short segments of content;
      evaluating the summary of the plurality of annotated short segments of content against predefined criteria; and
      applying the evaluation of the summary and the prompt to a second language model distinct from the model to produce an updated version of the prompt; and
      iteratively performing (i), (ii), and (iii) at least two times.
A2.The method of clause A1, including, after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content.
A3.The method of clause A1 or A2, wherein evaluating the summary of the plurality of annotated short segments of content against predefined criteria includes determining a score representing a quality of the summary produced by the prompt; and the method includes determining the final iteration of performing (i), (ii), and (iii) based on the score.
A4.The method of clause A1 or A2, including determining the final iteration of performing (i), (ii), and (iii) based on a maximum number of iterations to be performed.
A5.The method of any preceding clause, wherein obtaining the plurality of annotated short segments of content includes captioning short segments of a content item.
A6.The method of any preceding clause, wherein the prompt includes a fixed portion and a non-fixed portion, wherein the non-fixed portion is updated between iterations and the fixed portion is maintained d between iterations.
A7.The method of any preceding clause, wherein the longer segments of content correspond to one or more hours-long content items.
A8.The method of any preceding clause, wherein the model for summarizing longer segments of content comprises a second model in a system, the system further including a first model, wherein the output of the first model is provided as an input to the second model.
A9.A computer system comprising:
   one or more processors; and
   memory storing one or more programs, the one or more programs including instructions for:
      obtaining a plurality of annotated short segments of content;
      training a model for summarizing longer segments of content using training data comprising the plurality of annotated short segments of content, including:
         applying a prompt and the plurality of the annotated short segments of content to a first language model distinct from the model to produce a summary of the plurality of annotated short segments of content;
         evaluating the summary of the plurality of annotated short segments of content against predefined criteria; and
         applying the evaluation of the summary and the prompt to a second language model distinct from the model to produce an updated version of the prompt; and
         iteratively performing (i), (ii), and (iii) at least two times.
A10. The computer system of clause A9, the one or more programs including instructions for, after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content.
A11. The computer system of clause A9 or A10, wherein evaluating the summary of the plurality of annotated short segments of content against predefined criteria includes determining a score representing a quality of the summary produced by the prompt; and the method includes determining the final iteration of performing (i), (ii), and (iii) based on the score.
A12. The computer system of clause A9 or A10, the one or more programs including instructions for determining the final iteration of performing (i), (ii), and (iii) based on a maximum number of iterations to be performed.
A13. The computer system of any of clauses A9 to A12, wherein obtaining the plurality of annotated short segments of content includes captioning short segments of a content item.
A14. The computer system of any of clauses A9 to A13, wherein the prompt includes a fixed portion and a non-fixed portion, wherein the non-fixed portion is updated between iterations and the fixed portion is maintained between iterations.
A15. The computer system of any of clauses A9 to A14, wherein the longer segments of content correspond to one or more hours-long content items.
A16. The computer system of any of clauses A9 to A15, wherein the model for summarizing longer segments of content comprises a second model in a system, the system further including a first model, wherein the output of the first model is provided as an input to the second model.
A17. A non-transitory computer-readable storage medium storing one or more programs for execution by a computer system with one or more processors, the one or more programs comprising instructions for:
   obtaining a plurality of annotated short segments of content;
   training a model for summarizing longer segments of content using training data comprising the plurality of annotated short segments of content, including:
      applying a prompt and the plurality of the annotated short segments of content to a first language model distinct from the model to produce a summary of the plurality of annotated short segments of content;
      evaluating the summary of the plurality of annotated short segments of content against predefined criteria; and
      applying the evaluation of the summary and the prompt to a second language model distinct from the model to produce an updated version of the prompt; and
      iteratively performing (i), (ii), and (iii) at least two times.
A18. The non-transitory computer-readable storage medium of clause A17, the one or more programs comprising instructions for, after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content.
A19. The non-transitory computer-readable storage medium of clause A18, wherein evaluating the summary of the plurality of annotated short segments of content against predefined criteria includes determining a score representing a quality of the summary produced by the prompt; and the method includes determining the final iteration of performing (i), (ii), and (iii) based on the score.
A20. The non-transitory computer-readable storage medium of clause A18, the one or more programs comprising instructions for determining the final iteration of performing (i), (ii), and (iii) based on a maximum number of iterations to be performed.

The foregoing description, for purpose of explanation, has been described with reference to specific embodiments. However, the illustrative discussions above are not intended to be exhaustive or to limit the embodiments to the precise forms disclosed. Many modifications and variations are possible in view of the above teachings. The embodiments were chosen and described in order to best explain the principles and their practical applications, to thereby enable others skilled in the art to best utilize the embodiments and various embodiments with various modifications as are suited to the particular use contemplated.

## Claims

1. A method, comprising:
obtaining a plurality of annotated short segments of content;
determining training data comprising the plurality of annotated short segments of content, the training data for use in training a model for summarizing longer segments of content, including:
(i) applying a prompt and the plurality of the annotated short segments of content to a first language model distinct from the model to produce a summary of the plurality of annotated short segments of content;
(ii) evaluating the summary of the plurality of annotated short segments of content against predefined criteria; and
(iii) applying the evaluation of the summary and the prompt to a second language model distinct from the model to produce an updated version of the prompt; and
iteratively performing (i), (ii), and (iii) at least two times.
after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content.

2. The method of claim 1, wherein evaluating the summary of the plurality of annotated short segments of content against predefined criteria includes determining a score representing a quality of the summary produced by the prompt; and the method includes determining the final iteration of performing (i), (ii), and (iii) based on the score.

3. The method of claim 1, including determining the final iteration of performing (i), (ii), and (iii) based on a maximum number of iterations to be performed.

4. The method of any preceding claim, wherein obtaining the plurality of annotated short segments of content includes captioning short segments of a content item.

5. The method of any preceding claim, wherein the prompt includes a fixed portion and a non-fixed portion, wherein the non-fixed portion is updated between iterations and the fixed portion is maintained d between iterations.

6. The method of any preceding claim, wherein the longer segments of content correspond to one or more hours-long content items.

7. The method of any preceding claim, wherein the model for summarizing longer segments of content comprises a second model in a system, the system further including a first model, wherein the output of the first model is provided as an input to the second model.

8. A computer system comprising:
one or more processors; and
memory storing one or more programs, the one or more programs including instructions for:
obtaining a plurality of annotated short segments of content;
determining training data comprising the plurality of annotated short segments of content, the training data for use in training a model for summarizing longer segments of content, including:
(i) applying a prompt and the plurality of the annotated short segments of content to a first language model distinct from the model to produce a summary of the plurality of annotated short segments of content;
(ii) evaluating the summary of the plurality of annotated short segments of content against predefined criteria; and
(iii) applying the evaluation of the summary and the prompt to a second language model distinct from the model to produce an updated version of the prompt; and
iteratively performing (i), (ii), and (iii) at least two times; and
after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content.

9. The computer system of claim 8, wherein evaluating the summary of the plurality of annotated short segments of content against predefined criteria includes determining a score representing a quality of the summary produced by the prompt; and the method includes determining the final iteration of performing (i), (ii), and (iii) based on the score.

10. The computer system of claim 8, the one or more programs including instructions for determining the final iteration of performing (i), (ii), and (iii) based on a maximum number of iterations to be performed.

11. The computer system of any of claims 8 to 10, wherein obtaining the plurality of annotated short segments of content includes captioning short segments of a content item.

12. The computer system of any of claims 8 to 11, wherein the prompt includes a fixed portion and a non-fixed portion, wherein the non-fixed portion is updated between iterations and the fixed portion is maintained between iterations.

13. The computer system of any of claims 8 to 12, wherein the longer segments of content correspond to one or more hours-long content items.

14. The computer system of any of claims 8 to 13, wherein the model for summarizing longer segments of content comprises a second model in a system, the system further including a first model, wherein the output of the first model is provided as an input to the second model.

15. A non-transitory computer-readable storage medium storing one or more programs for execution by a computer system with one or more processors, the one or more programs comprising instructions for:
obtaining a plurality of annotated short segments of content;
determining training data comprising the plurality of annotated short segments of content, the training data for use in training a model for summarizing longer segments of content, including:
(i) applying a prompt and the plurality of the annotated short segments of content to a first language model distinct from the model to produce a summary of the plurality of annotated short segments of content;
(ii) evaluating the summary of the plurality of annotated short segments of content against predefined criteria; and
(iii) applying the evaluation of the summary and the prompt to a second language model distinct from the model to produce an updated version of the prompt; and
iteratively performing (i), (ii), and (iii) at least two times; and
after iteratively performing (i), (ii), and (iii) for a final iteration, applying the updated version of the prompt to the first language model to produce a final summary, wherein the final summary is used as an annotation of the plurality of annotated short segments to train the model for summarizing longer segments of content.
